# EUROPEAN PATENT APPLICATION

(11) **EP 3 205 679 A1**
(43) Date of publication of application: **16.08.2017**
(21) Application number: 16155416.7
(22) Date of filing: 12.02.2016
(51) Int. Cl.: C08G 18/48, C08G 18/75, C08G 18/08, C08G 18/12, C08G 18/34, C09J 175/08

(54) **METHOD FOR THE PREPARATION OF AQUEOUS POLYURETHANE DISPERSIONS**

(71) Applicant: Henkel AG & Co. KGaA, 40589 Düsseldorf (DE)
(72) Inventor: ZHAO, Ligang, 40593 Düsseldorf (DE); GIMENO GORMAZ, Nélida, 50010 Zaragoza (ES); PÉREZ BRIONES, Aurora, 03780 Pego (ES)

(57) **Abstract**

The present invention relates to methods for the solvent-free preparation of aqueous polyurethane dispersions that can be used as adhesives or coatings, are surfactant and solvent free and have low VOC emissions, are environmentally friendly, and provide for homogeneous and aging-resistant adhesives after drying. Also encompassed are the thus obtained dispersions, compositions containing them and their use as coatings and adhesives.

## Description

The present invention relates to methods for the solvent-free preparation of aqueous polyurethane dispersions that can be used as adhesives or coatings, are surfactant and solvent free and have low VOC emissions, are environmentally friendly, and provide for homogeneous and aging-resistant adhesives after drying. Also encompassed are the thus obtained dispersions, compositions containing them and their use as coatings and adhesives.

Polyurethane waterborne dispersions are innovative materials that provide chemical resistance, good film formation properties, toughness, flexibility and superior low-temperature impact resistance. Hence, these latexes are suitable candidates to be used as adhesives, sealants or coatings for various substrates.

However, the currently used methods for their production typically include the use of organic solvents in order to decrease the viscosity of the prepolymer and allow dispersing it into a continuous aqueous phase. Widely known and used are for example the so-called acetone process and a prepolymer emulsification process using N-methyl-2-pyrrolidone (NMP) as a solvent. In the acetone process, the amounts of acetone needed are typically high and have to be removed by distillation in the last step of the process. Moreover, the acetone thus obtained needs to be recycled or disposed of, raising the costs and environmental impact. NMP, having a higher boiling point, is typically not removed and remains in the polymer, strongly affecting the properties of the thus obtained latexes.

While there are processes known in the art that allow the preparation of polyurethane dispersions (PUDs) without the need for organic solvents, these have other drawbacks. For example, ionic backbone modifications of the prepolymers that are necessary to allow dispersion without organic solvents, strongly influence the properties of the final latex. Other approaches that rely on the use of low molecular weight prepolymers to achieve good dispersibility in the absence of organic solvents limit the final properties of the PUD, such as decreasing its performance in applications where it is used to replace natural latex. Accordingly, it is not possible to prepare high molecular weight polymers using said methods.

Consequently, there exists still need in the art for improved methods for preparing polyurethane-based adhesive systems that overcome at least some of the drawbacks of known systems.

The present invention described herein solves some of the known issues, allowing the production of waterborne polyurethane dispersions that are suitable for bonding substrates in an environmentally friendly process without organic solvents and optionally also without surfactants. The invention generally relates to a method to produce a dispersion of polyurethane particles in water, without using any organic solvents and without the need for surfactants, by applying shear forces. To obtain stable dispersions, nonionic and anionic stabilizers are incorporated into the polyurethane chain.

In a first aspect, the present invention thus relates to a process for manufacturing an aqueous, organic solvent-free polyurethane dispersion, the process comprising:
(1) forming an NCO-terminated polyurethane prepolymer with a number average molecular weight Mₙ in the range of more than 5000 g/mol to up to 25000 g/mol, preferably 10000 to 13000 g/mol from a reaction mixture comprising or consisting of:
   (a) at least one polyol, preferably polyether polyol, with a number average molecular weight Mₙ in the range of 400 to 10000 g/mol, preferably 500 g/mol to 3000 g/mol;
   (b) at least one nonionic stabilizer, wherein the at least one nonionic stabilizer comprises at least two hydroxyl groups;
   (c) at least one anionic stabilizer, wherein the at least one anionic stabilizer comprises at least two hydroxyl groups and at least one negatively charged functional group, preferably a carboxyl or sulfonic acid group; and
   (d) at least one polyisocyanate, preferably at least one aliphatic di- and/or triisocyanate, wherein the at least one polyisocyanate is used in excess with respect to the molar ratio of the isocyanate groups to the hydroxy groups of the other components of the reaction mixture to obtain an NCO-terminated polyurethane prepolymer;
(2) dispersing the prepolymer into a continuous aqueous phase under application of shear forces, preferably by mechanical stirring, to obtain an emulsion; and
(3) reacting the prepolymer with at least one chain extension agent to obtain an aqueous polyurethane dispersion;
wherein steps (1) and (2) are carried out in the absence of an organic solvent.

In another aspect, the invention relates to the aqueous polyurethane dispersion obtainable according to the process described herein.

Further aspects of the invention relate to adhesive or coating compositions that contain the aqueous polyurethane dispersion disclosed herein and the use of the aqueous polyurethane dispersion in adhesives and coatings.

"One or more", as used herein, relates to at least one and comprises 1, 2, 3, 4, 5, 6, 7, 8, 9 or more of the referenced species. Similarly, "at least one" means one or more, i.e. 1, 2, 3, 4, 5, 6, 7, 8, 9 or more. "At least one", as used herein in relation to any component, refers to the number of chemically different molecules, i.e. to the number of different types of the referenced species, but not to the total number of molecules. For example, "at least one polyol" means that at least one type of molecule falling within the definition for a polyol is used but that also two or more different molecule types falling within this definition can be present, but does not mean that only one molecule of said polyol is present.

If reference is made herein to a molecular weight, this reference refers to the number average molecular weight Mₙ, if not explicitly stated otherwise. The number average molecular weight Mₙ can be calculated based on end group analysis (OH numbers according to DIN 53240) or can be determined by gel permeation chromatography according to DIN 55672-1:2007-08 with THF as the eluent. If not stated otherwise, all given molecular weights are those determined by end group analysis. The weight average molecular weight M_{w} can be determined by GPC, as described for Mₙ.

All percentages given herein in relation to the compositions or formulations relate to weight % relative to the total weight of the respective composition or formula, if not explicitly stated otherwise.

"Absence of an organic solvent", as used herein, means that all steps are carried out without the use of an organic solvents and that all mixtures, components, compounds and compositions used and obtained in the steps of the methods described herein are essentially free of organic solvents. "Essentially free", as used in this context, means that the mixture, dispersion and/or composition contains less than 1 wt.-% of the given component, preferably less than 0.5 wt.-%, more preferably less than 0.1 wt.-%. "Organic solvents", as used herein, relate to all commonly used organic solvents, in particular volatile organic compounds (VOC), and include the widely used solvents acetone and NMP as well as various alcohols, ethers, esters, hydrocarbons, and the like that are used for their solvent properties only.

The at least one polyol (a) is a non-functionalized polyol, i.e. contains no functional groups besides the hydroxyl groups. The polyol (a) may comprise at least one polyether polyol and/or at least one polyester polyol. Preferably, the polyol (a) comprises at least one polyether polyol and optionally at least one polyester polyol, at least one polycarbonate polyol, or a mixture of any two or more of the afore-mentioned polyols. Particularly preferred are polyether polyols or mixtures of at least one polyether polyol with one or more polyester polyols. If a mixture of polyester and polyether polyols is used, the weight ratio may range from about 10:1 to 1:10, preferably 1:2 to 2:1.

The polyether polyol may be a polyalkylene glycol homo- or copolymer, preferably a polypropylene glycol homo- or copolymer, a polyethylene glycol homo- or copolymer, a polytetramethylene ether glycol (poly(THF) or PTMEG) homo- or copolymer, or a polypropylenglycol/polyethyleneglycol block copolymer. In various embodiments, the polyether polyol has a number average molecular weight Mₙ of 400 to 10000, preferably 500 to 3000 g/mol.

Polyester polyols that are useful in the processes described herein include those that are obtainable by reacting, in a polycondensation reaction, dicarboxylic acids with polyols. The dicarboxylic acids may be aliphatic, cycloaliphatic or aromatic and/or their derivatives such as anhydrides, esters or acid chlorides. Specific examples of these are succinic acid, glutaric acid, adipic acid, pimelic acid, suberic acid, azelaic acid or sebacic acid, phthalic acid, isophthalic acid, trimellitic acid, phthalic acid anhydride, tetrahydrophthalic acid anhydride, glutaric acid anhydride, maleic acid, maleic acid anhydride, fumaric acid, dimeric fatty acid and dimethyl terephthalate. Examples of suitable polyols are monoethylene glycol, 1,2-propanediol, 1,3-propanediol, 1,4-butanediol, 3-methylpentane-1,5-diol, neopentyl glycol (2,2-dimethyl-1,3-propanediol), 1,6-hexanediol, 1,8-otaneglycol cyclohexanedimethanol, 2-methylpropane-1,3-diol, dithyleneglycol, triethyleneglycol, tetraethyleneglycol, polyethyleneglycol, dipropyleneglycol, polypropyleneglycol, polypropyleneglycol, dibutyleneglycol and polybutyleneglycol. Alternatively, they may be obtained by ring-opening polymerization of cyclic esters, preferably ε-caprolactone.

In various embodiments, the polyester polyol has a melting temperature Tₘ > 0°C, preferably > 40 °C and/or has a number average molecular weight Mₙ in the range of 400 to 5000, preferably 500 to 3000 g/mol, more preferably 800 to 2500 g/mol, most preferably 1000 to 2000 g/mol.

Suitable polycarbonates can be obtained by reaction of carbon acid derivatives, e.g. diphenyl carbonate, dimethyl carbonate or phosgene with diols. Suitable examples of such diols include ethylene glycol, 1,2-and 1,3-propanediol, 1,3-and 1,4-butanediol, 1,6-hexanediol, 1,8-octanediol, neopentyl glycol, 1,4-bishydroxymethyl cyclohexane, 2-methyl-1,3-pro-panediol, 2,2,4-trimethyl pentanediol-1,3, dipropylene glycol, polypropylene glycols, dibutylene glycol, polybutylene glycols, bisphenol A, tetrabromobisphenol A as well as lactone-modified diols. The diol component preferably contains 40 to 100 wt. % hexanediol, preferably 1,6-hexanediol and/or hexanediol derivatives. More preferably the diol component includes examples that in addition to terminal OH groups display ether or ester groups.

The hydroxyl polycarbonates should be substantially linear. However, they can optionally be slightly branched by the incorporation of polyfunctional components, in particular low-molecular polyols. Suitable examples include glycerol, trimethylol propane, hexanetriol-1,2,6, butanetriol-1,2,4, trimethylol propane, pentaerythritol, quinitol, mannitol, and sorbitol, methyl glycoside, 1,3,4,6-dianhydrohexites.

Suitable polycarbonate polyols are, without limitation, those obtainable under the trademark names Desmophen® C3200 (Bayer) and Kuraray® C2050 (Poly-(3-methyl-1,5-pentanediol, 1,6-hexanediol)carbonate; Kuraray).

The reaction mixture may further comprise monomeric diols, such as 1,4-butanediol.

The reaction mixture further comprises at least one anionic stabilizer, wherein the at least one anionic stabilizer comprises at least two hydroxyl groups and at least one negatively charged functional group, preferably a carboxyl or sulfonic acid group.

The term "stabilizer", as used herein in the context of anionic and nonionic stabilizers, relates to a class of molecules that can stabilize the droplets in a dispersion or emulsion, i.e. prevent coagulation or coalescence. In various embodiments the stabilizer molecules comprise a hydrophilic and a hydrophobic part, with the hydrophobic part interacting with the droplet and the hydrophilic part be exposed to the solvent. While commonly used stabilizers are surfactants and may bear an electric charge, for example may be anionic surfactants or cationic surfactants, or may, alternatively, be non-ionic, the present invention avoids the use of surfactants, but uses stabilizer compounds that are built into the polyurethane polymer during (pre)polymer formation that provide for self-emulsifiable polyurethanes which spontaneously form stable dispersions in water without the assistance of external emulsifiers and exhibit increased stability.

The stabilizers used herein comprise anionic groups. The presence of such charged groups increases the stability of the dispersed polymer droplets or particles. Suitable anionic groups include, but are not limited to acidic groups, such as carboxylic acid or sulfonic acid groups and their respective salts. Concrete compounds suitable as anionic stabilizers in the sense of the present invention are 2,2-bis(hydroxyalkyl)alkane monocarboxylic acids, in particular 2,2-bis(hydroxymethyl)alkane monocarboxylic acids with a total carbon atom number of 5-8, such as 2,2-bis(hydroxymethyl)propionic acid (dimethylol propionic acid; DMPA). Also suitable are sulfonated polydiols with a molecular weight M_{w} in the range of up to 1000 g/mol, preferably up to 500 g/mol. Such sulfonated polydiols, for example propoxylated 1-methyl-2-methylol-3-hydroxy-1-propanesulfonate with a molecular weight M_{w} of about 430 g/mol, are commercially available under the name GS-7Q (Yedang G & Co. Ltd).

The above-described anionic stabilizers are combined with other compounds that can act as stabilizers, namely nonionic stabilizers.

Such nonionic stabilizers comprise polyols, preferably diols, or a mixture of different polyols and/or diols, including the monomeric diols and certain polyether polyols that have been described above in connection with the polyol (a). In various embodiments, the compounds used as nonionic stabilizers are different from compounds used as polyols (a). Suitable nonionic stabilizers have HLB (hydrophile lipophile balance) values between 6 and 19. The HLB values are calculated by calculating the molecular weight of the hydrophilic portion of the molecule and dividing said molecular weight of the hydrophilic part of the molecule by the total molecular weight of the molecule and then dividing the obtained percentage by 5. Typical nonionic stabilizers for oil-in-water emulsions have HLB values between 8 and 18. Preferred monomeric diols are glycols, such as ethylene glycol, propylene glycol, butylene glycol, neopentyl glycol and the like and (as polyether polyols) polymers thereof, such as polyethylene glycol, polypropylene glycol, and polybutylene glycol and copolymers of ethylene glycol, propylene glycol, and butylene glycol, preferably of ethylene glycol and propylene glycol, in particular block copolymers. The average molecular weight M_{w} of such polymeric stabilizers is preferably in the range of up to about 4000 g/mol, preferably up to about 3000 g/mol, more preferably up to about 2000 g/mol, typically calculated based on the OH number. Suitable non-ionic ethylene glycol/propylene glycol stabilizers are for example those commercially available under the trademark name Pluronic® from BASF, for example Pluronic PE3500 (molar mass of PP glycol block: 850 g/mol, 10 % PE glycol in molecule; molecular weight ca. 1000 g/mol) or Pluronic PE4300 (molar mass of PP glycol block: 1100 g/mol, 30 % PE glycol in molecule; molecular weight ca. 1750 g/mol).

In preferred embodiments of the invention, the at least one anionic stabilizer, such as DMPA and/or a sulfonated polydiol, is combined with a nonionic polyol stabilizer, preferably diol stabilizer, as defined above. In one specific embodiment, the mixture comprises at least one ethyleneglycol/propyleneglycol copolymer with a molecular weight M_{w} of up to 3000 g/mol and at least one anionic diol stabilizer, preferably DMPA or a sulfonated polydiol or both.

In such mixtures the weight ratio of nonionic to anionic stabilizer usually ranges from about 1:1 to about 20:1, preferably about 9:1 to 1:1. The polyol mixture, in various embodiments, comprises 0.1 to 20 wt.-%, preferably 1 to 5 wt.-%, more preferably 1 to 3 wt.-%, of the anionic stabilizer and/or 1 to 20 wt.-%, preferably 3 to 9 wt.-%, more preferably 5 to 9 wt.-%, of the nonionic stabilizer.

The term "reaction mixture", as used herein, relates to the mixture of the polyols including the stabilizer(s) and the polyisocyanate(s). "Polyol mixture", as used herein in relation to the mixture comprising the polyols, relates to a mixture comprising the at least one polyol (a), the at least one nonionic stabilizer (b), the at least one anionic stabilizer (c), and, optionally, any additional polyols that may be present.

The polyol mixture does not contain any organic solvents, and preferably also no surfactants and no further additives, i.e. consists of polyols, preferably those defined above, and the stabilizers.

In various embodiments, the polyol mixture comprises about 20 to about 99 wt.-%, preferably 30 to 85 wt.-%, of the at least one polyol (a), preferably a mixture of different polyols, for example of polyester polyols and polyether polyols, relative to the weight of the polyol mixture. The at least one polyol (a) may comprise a nonionic stabilizer polyol as defined above.

The anionic stabilizer is usually contained in amounts of about 0.1 to 20 wt.-%, preferably 1 to 5 wt.-%, more preferably 1 to 3 wt.-%, relative to the weight of the polyol mixture. Nonionic stabilizers are used in amounts of 1 to 20 wt.-%, preferably 3 to 9 wt.-%, more preferably 5 to 9 wt.-%, relative to the total weight of the polyol mixture. In various embodiments, the anionic stabilizers as defined above, may be used in amounts of 1 to 5 wt.-%, preferably 1 to 3 wt.-%, and nonionic stabilizers in amounts of 3 to 9 wt.-%, preferably 5 to 9 wt.-%, relative to the total weight of the polyol mixture.

The final reactant employed in the formation of the polyurethane prepolymer is a polyisocyanate. Any compound which includes at least two isocyanate groups is within the contemplation of the present invention. It is preferable, however, that the polyisocyanate be a diisocyanate. The incorporation of small amounts of isocyanate with a functionality higher than two, in particular a triisocyanate, is also contemplated and may under certain circumstances even be advantageous. Such polyisocyanates can act as cross-linkers. In this case where the polyisocyanate acts as a cross-linker, polyisocyanates based on hexamethylene diisocyanate are preferred. Suitable diisocyanates include, without limitation, methylenediphenyl diisocyanate (MDI), toluene-2,4-diisocyanate (TDI), hexamethylene diisocyanate (HDI), polymeric diphenylmethane diisocyanate (PMDI), isophorone diisocyanate (IPDI), methylene-4,4-bis(cyclohexyl)diisocyanate (H12MD1) and mixtures thereof. Although both aliphatic and aromatic polyisocyanates are within the contemplation of the present invention, it is preferred that the polyisocyanate be an aliphatic polyisocyanate. Thus, in a particularly preferred embodiment, the polyisocyanate is an aliphatic diisocyanate. Among particularly preferred aliphatic diisocyanates are isophorone diisocyanate, hexamethylene diisocyanate, and mixtures thereof. Suitable polyisocyanates are, for example, commercially available under the trademark name Desmodur® from Bayer AG (DE).

The polyisocyanate is used in molar excess with respect to the molar ratio of the isocyanate groups to the OH groups of all polyols present in the reaction mixture, i.e. in a concentration in excess of the stoichiometric concentration required to completely react with the hydroxyl groups, the OH/NCO equivalent ratio preferably being 1:1.1 to 1:4, more preferably 1:1.2 to 1:1.3. Preferably, the amount of the polyisocyanate is 20 % to 150 % in excess of the stoichiometric concentration required to completely react with the hydroxyl groups. The amount of the at least one polyisocyanate in the reaction mixture is typically in the range of 10 to 30 wt.-% relative to the reaction mixture. The remainder of the reaction mixture may be made up by the polyol mixture, as defined above.

Providing the polyol mixture may include the step of mixing the polyols (a) and, optionally, (b) and the stabilizers and heating the mixture. The heating may be required in case the polyols employed are solid at room temperature and need to be melted to form the polyol mixture. In preferred embodiments, the polyols and the stabilizers are combined and heated to about 70 to 95°C, for example about 75°C, while stirring the mixture under vacuum to dry. After the mixing, the mixture may be cooled to 60°C for the addition of the isocyanates.

"About", as used herein, relates to ± 10 %, preferably ± 5 % of the numerical value to which it refers. "About 70 °C" thus relates to 70 ± 7, preferably 70 ± 3.5 °C.

The polyol mixture is subsequently combined with at least one polyisocyanate in the reaction mixture to form the prepolymer. The prepolymer reaction usually occurs at elevated temperature, preferably in the range of between about 55°C and 105°C, more preferably between about 60 °C and about 100 °C, more preferably about 85-95 °C, over a period of between about 1 and about 24 hours. The reaction may be carried out in the presence of a catalyst that is added, such as a metal-based catalyst, for example a tin-based catalyst, or an organic catalyst. In preferred embodiments of the invention, the reaction mixture does not comprises a catalyst as defined above or only contains minor amounts of an organic catalyst.

The reaction continues until the free isocyanate content reaches or comes very close to the calculated value, as determined by standard titration with dibutylamine. Preferred values for the free isocyanate content in the prepolymer are in the range between 0.2 and 3 wt.-%, preferably 1 to 2 wt.-% relative to the total amount of polyols, including the stabilizer(s), and polyisocyanate in the mixture.

Once the free isocyanate content reaches the predetermined value, as defined above, the temperature may be reduced, for example to about 60 °C.

In the prepolymer preparation preferably no chain terminating agents or endcapping agents are used to control/limit the molecular weight of the prepolymer formed.

The prepolymer has a number average molecular weight Mₙ of more than 5000 to up to 25000, more preferably 10000 to 13000 g/mol.

In various embodiments, the prepolymer may be neutralized at this stage by using a suitable neutralization agent. In case an anionic acidic stabilizer is used, an amine base, such as triethylamine may be used.

The thus formed prepolymer is then dispersed as such into a continuous aqueous phase, preferably water, without the use of an organic solvent, such as acetone or NMP. The dispersing step may be carried out at elevated temperature, for example in the range of about 30 to 60 °C, for example at about 40 °C. The dispersing step may include emulsifying the polyurethane prepolymer into a continuous aqueous phase, preferably water, to form an emulsion, preferably under the action of a shear force. In various embodiments, the shear force is brought about by means of mechanical stirring only, for example using a mechanical stirrer at up to 1000 rpm, for example 200-1000 rpm, preferably 200-700 rpm, more preferably 200-400 rpm.

The term "emulsion", as used herein, relates to oil-in-water (O/W) emulsions, i.e. emulsions in which water is used in excess and is the continuous medium. In the described processes, stable droplets are obtained, which have typically a size between 50 and 500 nm, preferably between 100 and 400 nm, more preferably between 100 and 300 nm, most preferably between 100 and 200 nm as determined by dynamic light scattering (DLS) according to ISO 22412.

During chain extension in step (3), the isocyanate end-groups of the prepolymer are reacted with an appropriate chain extension agent containing at least two terminal NCO-reactive groups, for example a diamine, such as hydrazine, an alkylene diamine or cycloalkylene diamine or silane-containing diamine, preferably ethylene diamine, isophorone diamine, piperazine, or polyetheramine. Diols, such as an alkyldiol, including but not limited to 1,4-butanediol and 2-butyl-2-ethyl-1,3-propanediol, or water can also be used. The afore-mentioned chain extension reagents may also be combined with an endcapping reagent, such as a silane-containing amine, including, without limitation (3-aminopropyl)triethoxysilane (APTES). Silane-containing amines can further promote substrate adhesion. The chain extension reaction may be performed until essentially total conversion of the isocyanate groups, i.e. the chain extension agent is continuously added until free isocyanate groups are no longer detectable. It is generally preferred that the chain extension reaction is carried out until total conversion of the isocyanate groups.

The conversion can be monitored by techniques well-established in the art, for example IR spectroscopy.

The presence of a catalyst and/or higher temperature may also be required. Preferred chain extension agents useful according to the present invention include ethylene diamine, water, isophorone diamine, and/or a polyetherdiamine.

The aqueous polyurethane dispersion formed preferably has a solid content of 20 to 70 wt.-%, preferably 30 to 45 wt.-%, more preferably 30 to 40 wt.-% (determined using automatic moisture balance). The viscosity is preferably in the range of 50 to 10000 mPas, preferably 100 to 1000 mPas as determined by a Brookfield viscosimeter, spindle 4, 20 rpm. The viscosity may be adjusted to suit the desired application form by adding a thickener. Suitable viscosity adjusting and thickening agents are well-known in the art. The particle size as determined by dynamic light scattering (DLS) is preferably in the range of 50 to 500 nm, more preferably 80 to 400 nm, even more preferably between 80 and 300 nm, most preferably between 80 and 200 nm. The application drying temperature can range from 20 to 100°C, but preferably is about 20 to 85°C, more preferably 50 to 80°C.

The present invention also relates to adhesive and coating compositions that comprise the aqueous polyurethane dispersions.

The dispersion may also directly be used as an adhesive or coating or a component of such an adhesive or coating on various materials, such as oriented polypropylene (OPP), treated OPP, aluminum foil and polyesters. The use of the polymers and compositions disclosed herein for such applications thus also forms parts of the present invention.

Such adhesive or coating compositions can contain further ingredients all of which are well-known in the field. In various embodiments, the polyurethane dispersions described herein can be blended with ethyl vinyl acetate (EVA), acrylics, styrene acrylics (SA) or other dispersions. Other additives commonly used are antiblocking agents, biocides and defoamers. In various embodiments, the adhesive compositions may contain 60-80 wt.-% relative to the total weight of the composition of the PU dispersion. In various embodiments, they may additionally contain 10-20 wt.-% of another dispersion, such as an EVA dispersion. However, neither the dispersions nor the final compositions containing the dispersions contain organic solvents. Accordingly, the dispersions and/or compositions are essentially free of organic solvents.

The adhesives containing the dispersions described herein show good adhesive strength, while being solvent free and thus environmentally friendly.

The adhesives can be applied to the substrate by all known techniques, including without limitation, spraying, painting, dip-coating, spin-coating, printing and the like.

It is understood that all embodiments disclosed herein in relation to the methods are similarly applicable to the disclosed dispersions, compositions, and uses and vice versa.

The following examples are given to illustrate the present invention. Because these examples are given for illustrative purposes only, the invention should not be deemed limited thereto.

### Examples

### Example 1:

Desmophen 2061 BD polypropylene polyol (22.5 g), PolyTHF 1000 polyether polyol (22.5 g), Pluronic PE4300 polypropylene glycol/polyethylene glycol block copolymer nonionic stabilizer (4 g) and 2,2'-bis(hydroxymethyl)propionic acid anionic stabilizer (2.5 g, DMPA) were placed in a 500ml three necked round bottom flask equipped with a condenser and a mechanical stirrer. Then, the mixture was heated to 85 °C, and at this temperature, a homogeneous mixture was obtained. At this point, high vacuum was applied (< 0.1 mbar) while the temperature was maintained at 85 °C in order to remove water. The mixture was left stirring under vacuum at 85°C during 2 h. Once dried, the mixture was flushed with argon and cooled to 60 °C. Then, isophorone diisocyanate (14 g, IPDI) was added to the mixture.

Upon addition of isocyanate, the temperature increased until 75°C. Once the temperature increase stopped, the heating was set to 95 °C and it was stirred for 3 hours. Then the NCO content was measured and the reaction is considered finished if the value is like the theoretical one (0.92%) and the procedure can be continued.

The next step was the neutralization of DMPA adding dropwise 2-dimethylaminoethanol (1.49 g DMAE) to the prepolymer which is still warm (80°C).

Later the emulsification process was carried out: water (95 g) was added to the total amount of warm prepolymer to obtain a mixture 40/60 of PU/water that was added and stirred mechanically.

Then, the chain extension was performed: ethylenediamine (0.21 g, EDA) was added into the reactor and the chain extension was performed. 50% of the total amount of EDA was added, and was checked in the IR until no residual NCO was detected, so the chain extension was performed.

After chain extension, particle size and the solid content were measured.
Solid content: 31%
Particle size (DLS, ISO 22412): 80nm

### Example 2:

Desmophen 2061 BD polypropylene polyol (22.5 g), PolyTHF 1000 polyether polyol (22.5 g), Pluronic PE3500 polypropylene glycol/polyethylene glycol block copolymer nonionic stabilizer (2.5 g) and 2,2'-bis(hydroxymethyl)propionic acid anionic stabilizer (2.5 g, DMPA) were placed in a 500ml three necked round bottom flask equipped with a condenser and a mechanical stirrer. Then, the mixture was heated to 85 °C, and at this temperature, a homogeneous mixture was obtained. At this point, high vacuum was applied (< 0.1 mbar) while the temperature was maintained at 85 °C in order to remove water. The mixture was left stirring under vacuum at 85°C during 2 h. Once dried, the mixture was flushed with argon and cooled to 60 °C. Then, isophorone diisocyanate (13.4 g, IPDI) was added to the mixture.

Upon addition of isocyanate, the temperature increased until 75°C. Once the temperature increase stopped, the heating was set to 95 °C and it was stirred for 3 hours. Then the NCO content was measured and the reaction is considered finished if the value is like the theoretical one (0.81 %) and the procedure can be continued.

The next step was the neutralization of DMPA adding dropwise 2-dimethylaminoethanol (1.49 g DMAE) to the prepolymer which is still warm (80°C).

Later the emulsification process was carried out: water (93 g) was added to the total amount of warm prepolymer to obtain a mixture 40/60 of PU/water that was added and stirred mechanically.

Then, the chain extension was performed: ethylenediamine (0.18 g, EDA) was added into the reactor and the chain extension was performed. 50% of the total amount of EDA was added, and was checked in the IR until no residual NCO was detected, so the chain extension was performed.

After chain extension, particle size and the solid content were measured.
Solid content: 32%
Particle size (DLS, ISO 22412): 106nm

### Example 3:

Desmophen 2061 BD polypropylene polyol (22.5 g), PolyTHF 1000 polyether polyol (22.5 g), Pluronic PE3500 polypropylene glycol/polyethylene glycol block copolymer nonionic stabilizer (6 g) and 2,2'-bis(hydroxymethyl)propionic acid anionic stabilizer (2 g, DMPA) were placed in a 500ml three necked round bottom flask equipped with a condenser and a mechanical stirrer. Then, the mixture was heated to 85 °C, and at this temperature, a homogeneous mixture was obtained. At this point, high vacuum was applied (< 0.1 mbar) while the temperature was maintained at 85 °C in order to remove water. The mixture was left stirring under vacuum at 85°C during 2 h. Once dried, the mixture was flushed with argon and cooled to 60 °C. Then, isophorone diisocyanate (13.1 g, IPDI) was added to the mixture.

Upon addition of isocyanate, the temperature increased until 75°C. Once the temperature increase stopped, the heating was set to 95 °C and it was stirred for 3 hours. Then the NCO content was measured and the reaction is considered finished if the value is like the theoretical one (0.79%) and the procedure can be continued.

The next step was the neutralization of DMPA adding dropwise 2-dimethylaminoethanol (1.19 g DMAE) to the prepolymer which is still warm warm (80°C).

Later the emulsification process was carried out: water (97.5 g) was added to the total amount of warm prepolymer to obtain a mixture 40/60 of PU/water that was added and stirred mechanically.

Then, the chain extension was performed: ethylenediamine (0.23 g, EDA) was added into the reactor and the chain extension was performed. 50% of the total amount of EDA was added, and was checked in the IR until no residual NCO was detected, so the chain extension was performed.

After chain extension, particle size and the solid content were measured.
Solid content: 32%
Particle size (DLS, ISO 22412): 115 nm

### Example 4:

Desmophen 2061 BD polypropylene polyol (22.5 g), PolyTHF 1000 polyether polyol (22.5 g), Pluronic PE4300 polypropylene glycol/polyethylene glycol block copolymer nonionic stabilizer (4.5 g) and 2,2'-bis(hydroxymethyl)propionic acid anionic stabilizer (2.5 g, DMPA) were placed in a 500ml three necked round bottom flask equipped with a condenser and a mechanical stirrer. Then, the mixture was heated to 85 °C, and at this temperature, a homogeneous mixture was obtained. At this point, high vacuum was applied (< 0.1 mbar) while the temperature was maintained at 85 °C in order to remove water. The mixture was left stirring under vacuum at 85°C during 2 h. Once dried, the mixture was flushed with argon and cooled to 60 °C. Then, isophorone diisocyanate (13.7 g, IPDI) was added to the mixture.

Upon addition of isocyanate, the temperature increased until 75°C. Once the temperature increase stopped, the heating was set to 95 °C and it was stirred for 3 hours. Then the NCO content was measured and the reaction is considered finished if the value is like the theoretical one (0.76%) and the procedure can be continued.

The next step was the neutralization of DMPA adding dropwise 2-dimethylaminoethanol (1.5 g DMAE) to the prepolymer which is still warm warm (80°C).

Later the emulsification process was carried out: water (96 g) was added to the total amount of warm prepolymer to obtain a mixture 40/60 of PU/water that was added and stirred mechanically.

Then, the chain extension was performed: ethylenediamine (0.22 g, EDA) was added into the reactor and the chain extension was performed. 50% of the total amount of EDA was added, and was checked in the IR until no residual NCO was detected, so the chain extension was performed.

After chain extension, particle size and the solid content were measured.
Solid content: 32%
Particle size (DLS, ISO 22412): 119nm

### Example 5 (comparative):

Desmophen 2061 BD polypropylene polyol (30 g), PolyTHF 1000 polyether polyol (30 g) and 2,2'-bis(hydroxymethyl)propionic acid anionic stabilizer (4.4 g, DMPA) were placed in a 500ml three necked round bottom flask equipped with a condenser and a mechanical stirrer. Then, the mixture was heated to 85 °C, and at this temperature, a homogeneous mixture was obtained. At this point, high vacuum was applied (< 0.1 mbar) while the temperature was maintained at 85 °C in order to remove water. The mixture was left stirring under vacuum at 85°C during 2 h. Once dried, the mixture was flushed with argon and cooled to 60 °C. Then, isophorone diisocyanate (21.3 g, IPDI) was added to the mixture.

Upon addition of isocyanate, the temperature increased until 75°C. Once the temperature increase stopped, the heating was set to 95 °C and it was stirred for 3 hours. Then the NCO content was measured and the reaction is considered finished if the value is like the theoretical one (1.55%) and the procedure can be continued.

The next step was the neutralization of DMPA adding dropwise 2-dimethylaminoethanol (2.63 g DMAE) to the prepolymer which is still warm warm (80°C).

Later the emulsification process was carried out: water (126 g) was added to the total amount of warm prepolymer to obtain a mixture 40/60 of PU/water that was added and stirred mechanically. Then, the chain extension was performed: ethylenediamine (0.60 g, EDA) was added into the reactor and the chain extension was performed. 50% of the total amount of EDA was added, and was checked in the IR until no residual NCO was detected, so the chain extension was performed.

After chain extension, particle size and the solid content were measured.
Solid content: 35%
Particle size (DLS, ISO 22412): 147nm

### Example 6 (comparative):

Desmophen 2061 BD polypropylene polyol (30 g), PolyTHF 1000 polyether polyol (30 g) and 2,2'-bis(hydroxymethyl)propionic acid anionic stabilizer (4.1 g, DMPA) were placed in a 500ml three necked round bottom flask equipped with a condenser and a mechanical stirrer. Then, the mixture was heated to 85 °C, and at this temperature, a homogeneous mixture was obtained. At this point, high vacuum was applied (< 0.1 mbar) while the temperature was maintained at 85 °C in order to remove water. The mixture was left stirring under vacuum at 85°C during 2 h. Once dried, the mixture was flushed with argon and cooled to 60 °C. Then, isophorone diisocyanate (18.8 g, IPDI) was added to the mixture.

Upon addition of isocyanate, the temperature increased until 75°C. Once the temperature increase stopped, the heating was set to 95 °C and it was stirred for 3 hours. Then the NCO content was measured and the reaction is considered finished if the value is like the theoretical one (0.81 %) and the procedure can be continued.

The next step was the neutralization of DMPA adding dropwise 2-dimethylaminoethanol (2.45 g DMAE) to the prepolymer which is still warm warm (80°C).

Later the emulsification process was carried out: water (125 g) was added to the total amount of warm prepolymer to obtain a mixture 40/60 of PU/water that was added and stirred mechanically.

Then, the chain extension was performed: ethylenediamine (0.60 g, EDA) was added into the reactor and the chain extension was performed. 50% of the total amount of EDA was added, and was checked in the IR until no residual NCO was detected, so the chain extension was performed.

After chain extension, particle size and the solid content were measured.
Solid content: 30%
Particle size (DLS, ISO 22412): 124nm

### Example 7:

The coldseal adhesive properties of the water-based adhesive compositions described in examples 1-6 were tested. The dispersions were coated on cavitated coextruded film (MW247) at a coating weight of approximately 4 g/m² using a Meyer bar. Two 25 mm coldseal surfaces were sealed using crimp jaws (RDM Test Equipment, HSM-4; 25°C, 3 bar, 0.5 sec). Samples were separated and immediately tested on a tensiometer (Zwick tensil test machine) after sealing. Seals were checked in triplicate. Seals can also be checked after a set of period of time to evaluate aged seal performance and storage effects.

The results obtained for seal strength and adhesion are shown in Table 1.

**Table 1**

| Sample | MW Prepolymer^{a} | DMPA(wt%) | Nonionic stabilizer (wt%) | Seal strength (N/25mm) 3 bar, 0.5 sec |
|---|---|---|---|---|
| Commercial product^{b} | - | | | 4.5 |
| Comparative Example^{c} | 11000 | 3 | - | 4.5 |
| Example 1 | 11000 | 4 | 6 (PE4300) | 4.5 |
| Example 2 | 11000 | 4 | 4 (PE3500) | 4.5 |
| Example 3 | 11000 | 3 | 9 (PE3500) | 4.2 |
| Example 4 | 11000 | 4 | 7 (PE4300) | 5.0 |
| Example 5 (comparative) | 5000 | 5 | - | 1.9 |
| Example 6 (comparative) | 11000 | 5 | - | 2.4 |

| | | | | |
|---|---|---|---|---|
| ^{a}Theoretical Mw of prepolymer ^{b} Based on synthetic polyisoprene ^{c} Based on polyurethane prepared with acetone | | | | |

The sample in Example 4 giving the best results was further studied coated on coextruded OPP (oriented polypropylene). Initial seal strength and after 7 days as well as the adhesion and the blocking the adhesive composition based on Example 4 and the adhesive composition additionally comprising EVA (PUD/EVA (ethylene vinyl acetate) is 80/20, named as Example A) and SA (PUD/SA (styrene acrylate) is 70/30, named as Example B) dispersions were tested. The results are summarized in Table 2.

**Table 2**

| | Seal Strength (N/25mm) 3 bar; 0.5 sec | Adhesion test (N/25mm) 3 bar; 0.5 sec | Blocking test (N/25mm) 10t; 1d | Sealing strength after 7d (N/25mm) 3 bar; 0.5 sec |
|---|---|---|---|---|
| Example A | 3.7 | 7.9 | 0.1 | 7.6 |
| Example B | 4.8 | 8.6 | 0.1 | 3.6 |
| Example 4 | 5.0 | 7.1 | 0.3 | 5.6 |
| Comparative Example (Table 1) | 4.5 | 8.4 | 0.6 | 4.9 |

## Claims

1. Process for manufacturing an aqueous, organic solvent-free polyurethane dispersion, the process comprising:
(1) forming an NCO-terminated polyurethane prepolymer with a number average molecular weight Mₙ in the range of more than 5000 g/mol to up to 25000 g/mol, preferably 10000 to 13000 g/mol from a reaction mixture comprising or consisting of:
(a) at least one polyol, preferably polyether polyol and/or polyester polyol, with a number average molecular weight Mₙ in the range of 400 to 10000 g/mol, preferably 500 g/mol to 3000 g/mol;
(b) at least one nonionic stabilizer, wherein the at least one nonionic stabilizer comprises at least two hydroxyl groups;
(c) at least one anionic stabilizer, wherein the at least one anionic stabilizer comprises at least two hydroxyl groups and at least one negatively charged functional group, preferably a carboxyl or sulfonic acid group; and
(d) at least one polyisocyanate, preferably at least one aliphatic di- and/or triisocyanate, wherein the at least one polyisocyanate is used in excess with respect to the molar ratio of the isocyanate groups to the hydroxy groups of the other components of the reaction mixture to obtain an NCO-terminated polyurethane prepolymer;
(2) dispersing the prepolymer into a continuous aqueous phase under application of shear forces, preferably by mechanical stirring, to obtain an emulsion; and
(3) reacting the prepolymer with at least one chain extension agent to obtain an aqueous polyurethane dispersion;
wherein steps (1) and (2) are carried out in the absence of an organic solvent.

2. The process according to claim 1, wherein step (1) is carried out in the absence of a catalyst.

3. The process according to claim 1 or 2, wherein the at least one polyol is a polyalkylene glycol homo- or copolymer, preferably a polypropylene glycol homo- or copolymer, a polyethylene glycol homo- or copolymer, a polytetramethylene ether glycol homo- or copolymer, a polypropylenglycol/polyethyleneglycol block copolymer, or mixtures thereof.

4. The process according to any one of claims 1 to 3, wherein the process further comprises neutralizing the prepolymer obtained in step (1) prior to step (2).

5. The process according to any one of claims 1 to 4, wherein the reaction mixture is free of
(1) surfactants; and/or
(2) aromatic organic compounds.

6. The process according to any one of claims 1 to 5, wherein the at least one nonionic stabilizer
(1) has a HLB (hydrophile lipophile balance) value between 6 and 19, preferably between 8 and 18; and/or
(2) is selected from monomeric diols, preferably ethylene glycol, propylene glycol, butylene glycol, neopentyl glycol, or polymers thereof, preferably polyethylene glycol, polypropylene glycol, and polybutylene glycol and copolymers of ethylene glycol, propylene glycol, and butylene glycol, more preferably of ethylene glycol and propylene glycol; and/or
(3) has an average molecular weight M_{w} of up to about 4000 g/mol, preferably up to about 3000 g/mol, more preferably up to about 2000 g/mol.

7. The process according to any one of claims 1 to 6, wherein the at least one anionic stabilizer comprises a sulfonated polyglycol and/or 2,2-bis(hydroxymethyl)propionic acid (DMPA).

8. The process according to any one of claims 1 to 7, wherein
(1) the at least one polyisocyanate is used in excess with respect to the molar ratio of the isocyanate groups to the hydroxy groups of the combined polyols, the OH/NCO equivalent ratio preferably being 1:1.1 to 1:4, and/or
(2) the at least one polyisocyanate is at least one aliphatic diisocyanate or triisocyanate, preferably selected from the group consisting of isophorone diisocyanate (IPDI), hexamethylene diisocyanate (HDI), polymeric polyisocyanates based on IPDI or HDI, and mixtures thereof.

9. The process according to any one of claims 1 to 8, wherein step (2) comprises emulsifying the polyurethane prepolymer into a continuous aqueous phase, preferably water, by mechanical stirring.

10. The process according to any one of claims 1 to 9, wherein the chain extension agent comprises at least two NCO-reactive groups and is preferably selected from the group consisting of water, a diol and a diamine, more preferably hydrazine, an alkylene diamine, a cycloalkylene diamine, a silane-containing diamine, an alkyldiol, or a polyetherdiamine, most preferably ethylene diamine, water, isophoronediamine, or a polyetherdiamine, and is optionally used in an amount that ensures essentially total conversion of the isocyanate groups.

11. Aqueous polyurethane dispersion obtainable according to a process of any one of claims 1 to 10.

12. Adhesive composition, comprising the aqueous polyurethane dispersion according to claim 11.

13. The adhesive composition according to claim 12, wherein the adhesive composition is essentially free of
(1) inorganic fillers; and/or
(2) organic solvents; and/or
(3) volatile organic compounds (VOC); and/or
(4) metal-containing compounds; and/or
(5) aromatic compounds.

14. Use of the aqueous polyurethane dispersion according to claim 11 in an adhesive composition.
